# EUROPÄISCHE PATENTANMELDUNG

(11) **EP 1 147 972 A2**
(43) Veröffentlichungstag der Anmeldung: **24.10.2001**
(21) Anmeldenummer: 01108557.8
(22) Anmeldetag: 05.04.2001
(51) Int. Cl.: B62D 27/06, B62D 25/06

(54) **Fahrzeug-Karosserieteil in Sandwich-Bauweise**

(30) Priorität: 17.04.2000 DE 10019199
(71) Anmelder: Webasto Vehicle Systems International GmbH, 82131 Stockdorf (DE)
(72) Erfinder: Seifert, Wolfgang, 82110 Germering (DE)
(74) Vertreter: Konnerth, Dieter Hans

(57) **Zusammenfassung**

Fahrzeug-Karosserieteil, insbesondere Fahrzeugdach, das in Sandwich-Bauweise schichtartig aus einer Außenschale (11, 12) und einer auf einer Schaumschicht (13) basierenden Innenschale (13, 14) aufgebaut ist. Erfindungsgemäß ist vorgesehen, daß die beiden Schalen (11, 12; 13, 14) durch Adhäsion lösbar verbunden sind. Durch diese Maßnahme kann im Reparaturfall die Innenschale (13, 14) problemlos von der Außenschale (11, 12) abgezogen und durch ein entsprechendes, ggfs. selbstklebend ausgeführtes Ersatzteil ersetzt zu werden. Die Herstellung des erfindungsgemäßen Fahrzeug-Karosserieteils (10) erfolgt vorteilhafterweise in einem Serienfolgewerkzeug.

## Beschreibung

Die Erfindung betrifft ein Fahrzeug-Karosserieteil, insbesondere ein Fahrzeugdach, das in Sandwich-Bauweise schichtartig aus einer Außenschale und einer auf einer Schaumschicht basierenden Innenschale aufgebaut ist.

Ein derartiges Fahrzeug-Karosserieteil in Gestalt eines Fahrzeugdachs ist beispielsweise aus der WO 98/39170 (entsprechend der DE 197 09 016 A1) bekannt. Dieses bekannte Dach umfasst in einstückiger untrennbarer Ausbildung die Innenschale und die Außenschale, die modulartig getrennt hergestellt sind. Die den Dachhimmel bildende Innenschale steht über die Außenränder des Fahrzeugdachs allseitig über und ist damit größer als die Innenabmessungen der von den Holmen bzw. Profilen des Karosserierahmens begrenzten Karosserieöffnung. Diese überstehenden Außenränder der Innenschale sind derart flexibel bzw. elastisch, dass sie für den Hindurchtritt durch die von dem Karosserierahmen begrenzten Karosserieöffnungen unter partieller Faltung in den Eckbereichen nach unten ohne bleibende Deformation umbiegbar sind und zur Verkleidung des Karosserierahmens dienen, wodurch sich zusätzliche Abdeckleisten und Abdeckprofile auch in den Eckbereichen erübrigen. Nachteilig an diesem bekannten Fahrzeugdach ist jedoch, dass die den Himmel bildende Innenschale nachträglich nicht demontierbar ist. Außerdem erfordert dieses Fahrzeugdach im Schäumwerkzeug relativ komplizierte Schieber.

Ein weiteres getrennt vorgefertigtes Fahrzeugdach ist aus der DE 33 29 407 A1 bekannt. Dieses Fahrzeugdach wird am Dachrahmen des Fahrzeugs lösbar mittels Riegelleisten arretiert und ist damit als ganzes vom Fahrzeug nachträglich entnehmbar.

Aus der DE 42 32 689 A1 ist eine Fahrzeugdachauskleidung bekannt, die eine innenliegende Dekorschicht und eine Absorberschicht umfasst, die als Schaumschicht der Dekorschicht hinterlegt ist. Außerdem umfasst diese Dachauskleidung eine Trägerschicht, einen weiteren Absorber und eine Feuchtigkeitssperre. Der Träger besteht beispielsweise aus einer perforierten, mit einem Absorber ausgefüllten Wellpappe.

Angesichts dieses Standes der Technik liegt der Erfindung die Aufgabe zugrunde, ein Fahrzeug-Karosserieteil der eingangs genannten Art zu schaffen, das einen nachträglichen Austausch der Innenschale des bestimmungsgemäß montierten Fahrzeug-Karosserieteils problemlos gewährleistet.

Gelöst wird diese Aufgabe durch ein Fahrzeug-Karosserieteil mit den Merkmalen des Anspruchs 1. Vorteilhafte Weiterbildungen der Erfindung sind in den Unteransprüchen angegeben. Der Anspruch 13 betrifft ein kostengünstiges und einfaches Verfahren zur Herstellung des erfindungsgemäßen Fahrzeug-Karosserieteils.

Das erfindungsgemäße Fahrzeug-Karosserieteil stellt demnach ebenso ein vorgefertigtes Bauteil dar wie das eingangs genannte gattungsgemäße Fahrzeug-Karosserieteil. Im Gegensatz zu diesem bekannten Fahrzeug-Karosserieteil sind jedoch die beiden Schalen nicht unlösbar, sondern lösbar durch Adhäsion bzw. partielle Kohäsion miteinander verbunden, so dass jederzeit die Innenschale, im Fall eines Fahrzeugdachs der Fahrzeughimmel, von der Außenschale abgezogen und beispielsweise durch ein selbstklebend ausgeführtes Ersatzteil ersetzt werden kann.

Die Verbindung der beiden Schalen durch Adhäsion hat den weiteren Vorteil, dass die Innenschale, die im Fahrzeug typischerweise eine Innenverkleidung bildet, zur Montage partiell von der Außenschale gelöst und daraufhin wieder mit der Außenschale verbunden werden kann. Die Montage des Fahrzeug-Karosserieteils am Fahrzeug gestaltet sich damit problemlos.

Durch die Adhäsionsverbindung der beiden Schalen des Fahrzeug-Karosserieteils erübrigen sich Verbindungselemente zwischen Außenschale und Innenschale.

Gemäß einer vorteilhaften Weiterbildung der Erfindung ist die Adhäsion zwischen den beiden Schalen des Fahrzeug-Karosserieteils rasterförmig verteilt vorgesehen, so dass eine gezielt partielle Haftung zwischen den beiden Schalen bereitgestellt wird, die eine ausreichende dauerhafte Verbindung dieser beiden Teile ebenso wie deren nachträglich problemlose Trennung gewährleistet.

Die Adhäsionsverbindung der beiden Schalen des Fahrzeug-Karosserieteils kann grundsätzlich in unterschiedlichster Weise realisiert werden. Demnach kann beispielsweise eine Klebefole zwischen den beiden Schalen angeordnet werden, die im Verlauf der Herstellung des Karosserie-Sandwichteils an einer der beiden Schalen angebracht wird, bevor die andere Schale hierauf ausgebildet wird. Bevorzugt ist jedoch eine auf die gesamte Verbindungsfläche bezogene partielle Adhäsionsverbindung der beiden Schalen, die vorteilhafterweise durch ein geeignetes Trennmittel bereitgestellt wird. Dieses Trennmittel kann in Gestalt einer Lochrasterfolie bereitgestellt sein oder als Siebdruckschicht, die auf eine oder beide Schalen im Lochrastermuster aufgetragen ist.

Gemäß einer auch hinsichtlich der Herstellung vorteilhaften Variante der Erfindung umfasst nicht nur die Innenschale, sondern auch die Außenschale eine Schaumschicht. Die Schaumschicht der Außenschale ist bevorzugt aus Hartschaum gebildet, während die Innenschale, die die Fahrzeuginnenverkleidung bereitstellt, bevorzugt aus Weichschaum gebildet ist. Beide Schaumschichten können außen durch Schutzschichten abgedeckt sein. So ist beispielsweise die Außenseite der Schaumschicht der Außenschale durch eine Deckschicht aus Kunststoff oder Blech abgedeckt, während die Außenseite der Schaumschicht der Innenschale beispielsweise durch Kunststoff oder Stoff, beispielsweise durch eine Dekorschicht, abgedeckt ist.

Das erfindungsgemäße Fahrzeug-Karosserieteil mit den beiden durch Adhäsion miteinander verbundenen Schalen kann vorteilhafterweise durch ein Verfahren hergestellt werden, das ein Folgewerkzeug nutzt, in welchem nach Erzeugung der Schaumschicht der Außenschale auf dieser das Trennmedium zur Bereitstellung partieller Adhäsion aufgebracht und auf diesem die Schaumschicht der Innenschale erzeugt wird, dessen Deckschicht gegebenenfalls daraufhin aufgebracht wird. Die entsprechende Deckschicht der Schaumschicht der Außenschale wird gegebenenfalls vor Erzeugung dieser Schaumschicht in dem Folgewerkzeug angeordnet. In dem Fall, dass die Innenschale nach Montage des Fahrzeug-Karosserieteils beispielsweise im Reparaturfall ausgetauscht werden soll, kann das vorteilhaft selbstklebend ausgeführte Ersatzteil im selben Serienfolgewerkzeug hergestellt werden, das zur Herstellung des ursprünglichen Fahrzeug-Karosserieteils verwendet wurde.

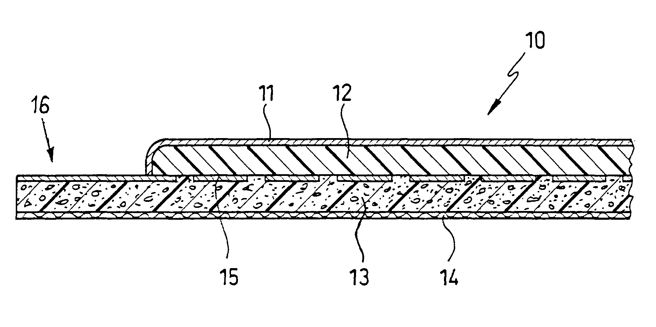

Nachfolgend wird die Erfindung anhand der Zeichnung beispielhaft näher erläutert; die einzige Figur der Zeichnungen zeigt schematisch den Schichtaufbau des vorgefertigten Fahrzeug-Karosserieteils, das beispielsweise als Fahrzeugdach zum Einsatz kommt und allgemein mit der Bezugsziffer 10 bezeichnet ist. Dieses Fahrzeug-Fertigbauteil ist in an sich bekannter Weise in Sandwich-Bauweise erstellt und umfasst in der Figur von oben nach unten und in der praktischen Anwendung von außen nach innen eine erste Deckschicht 11, eine erste Schaumschicht in Gestalt einer Hartschaumschicht 12, eine zweite Schaumschicht in Gestalt einer Weichschaumschicht 13 und eine zweite Deckschicht 14. Die erste Deckschicht 11 besteht beispielsweise aus Kunststoff oder aus Blech und bildet die Außenhaut des Karosserieteils bzw. des Fahrzeugdachs 10, während die zweite Deckschicht 14, beispielsweise als Dekorschicht, bevorzugt aus Stoff gebildet ist und die Innenhaut des Karosserieteils bzw. des Fahrzeugdachs 10, in diesem Fall also den Himmel bildet.

Der Verbund aus erster Deckschicht 11 und Hartschaumschicht 12 bildet die Außenschale dieses als Fertigteil gebildeten Fahrzeugdachs 10, während die Weichschaumschicht 13 und die zweite Deckschicht 14 dessen Innenschale bildet. Bei der in der Figur gezeigten Ausführungsform des noch nicht montierten Fahrzeugdachs 10 steht die Innenschale 13, 14 über die Außenschale 11, 12 vor, wobei der vorstehende Rand 16 der Innenschale 13, 14 zur Verbindung des Fahrzeugdachs 10 mit der übrigen Karosseriestruktur dient.

Erfindungsgemäß sind die beiden Schalen 11, 12 und 13, 14 durch Adhäsion lösbar miteinander verbunden. Zu diesem Zweck ist zwischen der Hartschaumschicht 12 und der Weichschaumschicht 13 ein Trennmittel in Gestalt einer Lochrasterfolie 15 vorgesehen, die sich bei der dargestellten Ausführungsform auch in den überstehenden Randbereich 16 der Weichschaumschicht 13 erstreckt. Durch die Perforation der Lochrasterfolie 15 wird eine gezielte partielle Haftung zwischen der Weichschaumschicht 13 und der Hartschaumschicht 12 geschaffen, so daß diese beiden Schichten ausschließlich im Bereich der Löcher bzw. der Perforation der Lochrasterfolie 15 aneinander haften. Die Lochrasterfolie 15 kann auch durch ein Siebdruckmuster auf einer der beiden Schaumschichten 12, 13 gebildet sein, wobei dieses Muster ebenfalls bevorzugt als Lochraster gebildet ist, um eine gezielte partielle Haftung zwischen den beiden Schichten 12, 13 zu erzielen. Größe und Anzahl der Haftpunkte, die durch die Lochrasterfolie 15 bereitgestellt werden, sind so gewählt, dass die Adhäsion ausreichend hoch ist, die Innenschale 13, 14 mit der Außenschale 11, 12 dauerhaft zu verbinden und andererseits derart niedrig ist, dass die Innenschale 13, 14 jederzeit nachträglich von der Außenschale 11, 12 durch Abziehen getrennt werden kann. Ein derartiges Abtrennen der Innenschale von der Außenschale bzw. der Weichschaumschicht 13 von der Hartschaumschicht 12 kann beispielsweise in einem Reparaturfall erforderlich sein und die abgezogene Innenschale wird nach Vornahme der Reparatur durch ein beispielsweise selbstklebend ausgeführtes Ersatzteil ausgetauscht.

Die Herstellung des als Fertigbauteil gebildeten Fahrzeugdachs 10 erfolgt vorteilhafterweise in einem Folgewerkzeug. In diesem wird beispielsweise zunächst der Verbund aus erster Deckschicht 11 und Hartschaumschicht 12 erzeugt, woraufhin das Trennmittel in Gestalt von beispielsweise der Lochrasterfolie 15 auf die freie Oberfläche der Hartschaumschicht 12 aufgebracht wird. In einem weiteren Folgeschritt wird dann die Weichschaumschicht 13 auf der Lochrasterfolie 15 ausgebildet, wodurch diese Weichschaumschicht 13 zur Haftung mit der Hartschaumschicht 12 durch die Löcher der Lochrasterfolie 15 gebracht wird. Daraufhin wird die zweite Deckschicht 14 auf der freien Oberfläche der Weichschaumschicht 13 aufgebracht, wodurch das Fahrzeugdach 10 als Fertigbauteil fertiggestellt ist und an einer Fahrzeug-Karosserie montiert werden kann.

Das erfindungsgemäße Fahrzeug-Karosserieteil ist vorstehend beispielhaft anhand eines Fahrzeug-Fertigdachs erläutert worden. Die Erfindung ist jedoch nicht hierauf beschränkt. Vielmehr können auch andere Karosserieteile in der erfindungsgemäßen Weise aufgebaut und hergestellt werden.

### Bezugszeichenliste

- 10: Fahrzeugdach
- 11: erste Deckschicht
- 12: Hartschaumschicht
- 13: Weichschaumschicht
- 14: zweite Deckschicht
- 15: Lochrasterfolie
- 16: Randbereich

## Patentansprüche

1. Fahrzeug-Karosserieteil, insbesondere Fahrzeugdach, das in Sandwich-Bauweise schichtartig aus einer Außenschale (11, 12) und einer auf einer Schaumschicht (13) basierenden Innenschale (13, 14) aufgebaut ist, **dadurch gekennzeichnet, daß** die beiden Schalen (11, 12; 13, 14) durch Adhäsion lösbar verbunden sind.

2. Fahrzeug-Karosserieteil nach Anspruch 1, **dadurch gekennzeichnet, daß** die Adhäsion zwischen den beiden Schalen (11, 12; 13, 14) rasterförmig verteilt partiell vorgesehen ist.

3. Fahrzeug-Karosserieteil nach Anspruch 2, **dadurch gekennzeichnet, daß** die partielle Adhäsion durch ein zwischen den beiden Schalen (11, 12; 13, 14) angeordnetes Trennmittel (15) bereitgestellt ist.

4. Fahrzeug-Karosserieteil nach Anspruch 3, **dadurch gekennzeichnet, daß** das Trennmittel (15) eine Lochrasterfolie umfaßt.

5. Fahrzeug-Karosserieteil nach Anspruch 3 oder 4, **dadurch gekennzeichnet, daß** das Trennmittel (15) eine auf eine oder beide Schalen im Lochrastermuster aufgetragene Siebdruckschicht umfaßt.

6. Fahrzeug-Karosserieteil nach einem der Ansprüche 1 bis 5, **dadurch gekennzeichnet, daß** die Außenschale (11, 12) ebenfalls auf einer Schaumschicht (12) basiert, wobei die Adhäsionsverbindung der beiden Schalen (11, 12; 13, 14) zwischen deren Schaumschichten (12 und 13) vorgesehen ist.

7. Fahrzeug-Karosserieteil nach Anspruch 6, **dadurch gekennzeichnet, daß** die Schaumschicht (12) der Außenschale (11, 12) aus Hartschaum besteht.

8. Fahrzeug-Karosserieteil nach einem der Ansprüche 1 bis 7, **dadurch gekennzeichnet, daß** die Schaumschicht (13) der Innenschale (13, 14) eine Weichschaumschicht ist.

9. Fahrzeug-Karosserieteil nach Anspruch 7 oder 8, **dadurch gekennzeichnet, daß** auf die Außenseite der Schaumschicht (12) der Außenschale (11, 12) durch eine Deckschicht (11) abgedeckt ist.

10. Fahrzeug-Karosserieteil nach Anspruch 9, **dadurch gekennzeichnet, daß** die Deckschicht (11) aus Blech oder aus Kunststoff besteht.

11. Fahrzeug-Karosserieteil nach einem der Ansprüche 1 bis 10, **dadurch gekennzeichnet, daß** die Außenseite (14) der Schaumschicht (13) der Innenschale (13, 14) durch eine weitere Deckschicht (14) abgedeckt ist.

12. Fahrzeug-Karosserieteil nach Anspruch 11, **dadurch gekennzeichnet, daß** die Deckschicht (14) aus Stoff besteht.

13. Verfahren zur Herstellung des Fahrzeug-Karosserieteils (10) nach einem der Ansprüche 1 bis 12, **dadurch gekennzeichnet, daß** die Herstellung in einem Folgewerkzeug erfolgt, wobei nach Erzeugung der Schaumschicht der Außenschale auf dieser das Trennmedium aufgebracht und auf diesem die Schaumschicht der Innenschale erzeugt wird.
